# NEUE EUROPÄISCHE PATENTSCHRIFT

(11) **EP 2 380 234 B2**
(45) Veröffentlichungstag und Bekanntmachung des Hinweises auf die Entscheidung über den Einspruch: **13.07.2022**
(45) Hinweis auf die Patenterteilung: 01.08.2018
(21) Anmeldenummer: 09763956.1
(22) Anmeldetag: 02.12.2009
(51) Int. Cl.: H01Q 1/12, H01Q 1/38

(54) **TRANSPARENTE, FLÄCHENHAFT AUSGEFÜHRTE ANTENNE, VERFAHREN ZU IHRER HERSTELLUNG UND IHRE VERWENDUNG**
TRANSPARENT PLANE ANTENNA, MANUFACTURING METHOD FOR THE ANTENNA, AND USE OF THE ANTENNA
ANTENNE PLANE TRANSPARENTE, PROCÉDÉ DE FABRICATION DE CETTE ANTENNE, ET UTILISATION DE CETTE ANTENNE

(30) Priorität: 16.01.2009 DE 102009004927
(43) Veröffentlichungstag der Anmeldung: 26.10.2011
(73) Patentinhaber: SAINT-GOBAIN GLASS FRANCE, 92400 Courbevoie (FR)
(72) Erfinder: DEGEN, Christoph, 52072 Aachen (DE); VORTMEIER, Gunther, 52134 Herzogenrath (DE); DROSTE, Stefan, 52134 Herzogenrath (DE)
(74) Vertreter: Gebauer, Dieter Edmund
(86) Internationale Anmeldenummer: PCT/EP2009/066237
(87) Internationale Veröffentlichungsnummer: WO 2010/081589

(56) Entgegenhaltungen:
- EP-A1- 1 489 680
- EP-A1- 1 868 261
- EP-A2- 0 911 906
- EP-B1- 1 438 766
- WO-A1-2004/027923
- US-A1- 2007 040 746
- US-B2- 6 809 692

## Beschreibung

Die vorliegende Erfindung betrifft eine neue, transparente, flächenhaft ausgeführte Antenne, geeignet für das Senden und Empfangen elektromagnetischer Wellen.

Außerdem betrifft die vorliegende Erfindung ein neues Verfahren zur Herstellung einer transparenten flächenhaft ausgeführten Antenne, geeignet für das Senden und Empfangen elektromagnetischer Wellen.

Nicht zuletzt betrifft die vorliegende Erfindung die Verwendung der nach dem neuen Verfahren hergestellten, transparenten, flächenhaft ausgeführten Antenne, als transparentes Einbauteil oder als Einzelstück.

Verbundsicherheitsglasscheiben, insbesondere Windschutzscheiben, für Kraftfahrzeuge, die elektrisch leitfähige, transparente Schichten enthalten, und Verfahren zu ihrer Herstellung sind beispielsweise aus den Patentanmeldungen und Patentschriften US 4,010,304, US 4,385,226, US 4,565,719, US 4,655,811, US 4,725,710, US 4,985,312, US 5,111,329, US 5,324,374, EP 0 638 528 A1, EP 0 718 250 A2, DE 697 31 268 T2, WO 00/72635 A1 und US 7,223,940 B2 bekannt. Die transparenten, elektrisch leitfähigen Schichten können der vollflächigen Beheizung der Verbundsicherheitsglasscheiben oder als IR-Strahlung reflektierende Schichten dienen; vorzugsweise befinden sie sich im Innern der Verbundsicherheitsglasscheiben.

Außerdem ist es aus den Patentanmeldungen US 2003/0112190 A1, EP 0 720 249 A2, DE 198 32 28 A1 und DE 103 19 606 A1 bekannt, Verbundsicherheitsglasscheiben mit diesen transparenten, elektrisch leitfähigen Schichten als flächenhaft ausgeführte Antennen für den Empfang von elektromagnetischer Strahlung, insbesondere Radiostrahlung, zu nutzen. Die empfangenen Signale können dabei galvanisch oder kapazitiv ausgekoppelt werden.

Der Nachteil einer solchen Anordnung liegt darin, dass die transparente, elektrisch leitfähige Schicht nahe an den Scheibenrand heranreicht, was zu einer hochfrequenztechnisch starken elektrischen Kopplung zwischen der transparenten, elektrisch leitfähigen Schicht und der im Allgemeinen elektrisch leitfähigen Fahrzeugkarosserie kommt. Diese Kopplung beeinträchtigt die Antennenfunktion der Scheibe beträchtlich. Man kann diesen Nachteil zumindest teilweise dadurch beheben, dass man die transparente, elektrisch leitfähige Schicht im Randbereich der Scheibe umlaufend in einer Breite von mehreren Zentimetern entfernt. Indes führt eine mehrere Zentimeter breite, umlaufende Randentschichtung zu einem optisch inakzeptablen Übergang zwischen der beschichteten und der unbeschichteten Fläche im Sichtbereich der Scheibe. Dieses Problem ist insbesondere bei der Anwendung abrasiver Entschichtungsverfahren gravierend. Desweiteren wird durch eine, aus antennentechnischer Sicht vorteilhaften Randentschichtung mit einer Breite von bis zu 50 mm oder in seltenen Fällen auch mehr der thermische Komfort der Scheibe nachhaltig negativ beeinflusst.

Hinzu kommt noch, dass diese breite umlaufende Randentschichtung nicht mehr einfach durch Keramikdruck mit einem umlaufenden opaken Randstreifen verdeckt werden kann, wie dies bei der üblicherweise verwendeten umlaufenden Randentschichtung mit einer Breite von 10 mm oder weniger der Fall ist. Darüber hinaus wird durch einen breiten, umlaufenden, opaken Randstreifen das Gesichtsfeld des Fahrers des Kraftfahrzeugs stark eingeschränkt, was aus Gründen der Sicherheit vermieden werden muss.

Das Dokument US6809692 offenbart eine Antenne gemäss dem Oberbegriff des Anspruchs 1. Der vorliegenden Erfindung lag die Aufgabe zu Grunde, neue, transparente, flächenhaft ausgeführte Antennen für das Senden und Empfangen elektromagnetischer Wellen mit einer transparenten, elektrisch leitfähigen Beschichtung bereitzustellen, welche die Nachteile des Standes der Technik nicht mehr länger aufweisen, sondern die in einfacher Weise hergestellt werden können und als transparente, funktionale und dekorative Einzelstücke oder als transparente Einbauteile in Fortbewegungsmitteln für den Verkehr zu Lande, zur Luft und zu Wasser sowie in Möbeln, Geräten und Gebäuden eine hervorragende Antennenleistung aufweisen. Im Falle der transparenten Einbauteile soll die hervorragende Antennenleistung auch bei einer elektrisch isolierenden, umlaufenden Randentschichtung einer Breite von 10 mm und weniger nicht durch eine hochfrequenztechnisch starke elektrische Kopplung beeinträchtigt werden. Dabei soll es möglich sein, die elektrisch isolierende, umlaufende Randentschichtung problemlos mit einem umlaufenden opaken Randstreifen zu verdecken, so dass das Gesichtsfeld von hindurch blickenden Personen, wie z.B. die Fahrer von Kraftfahrzeugen, nicht mehr stark eingeschränkt werden muss, sondern aus Gründen der Sicherheit groß bleiben kann.

Außerdem lag der Erfindung die Aufgabe zu Grunde, ein geeignetes neues Verfahren zur Herstellung der vorgenannten transparenten, flächenhaft ausgeführten Antennen für das Senden und Empfangen elektromagnetischer Wellen bereitzustellen, das die Nachteile des Standes der Technik nicht mehr länger aufweist, sondern das in einfacher und sehr gut reproduzierbarer Weise transparente, flächenhaft ausgeführte Antennen liefert, welche die vorgenannten Eigenschaften und Vorteile aufweisen.

Nicht zuletzt war es die Aufgabe der vorliegenden Erfindung, Verwendungen für die neuen transparenten, flächenhaft ausgeführten Antennen welche mithilfe des erfindungsgemäßen neuen Verfahrens hergestellt werden aufzuzeigen.

Demgemäß wurde die transparente, flächenhaft ausgeführte Antenne (A) für das Senden und Empfangen elektromagnetischer Wellen gefunden, gemäss Anspruch 1. die im Folgenden der Kürze halber als »erfindungsgemäße Antenne« bezeichnet wird. Außerdem wurde das neue Verfahren zur Herstellung einer transparenten, flächenhaft ausgeführten Antenne (A) für das Senden und Empfangen elektromagnetischer Wellen gefunden, gemäss Anspruch 11. Nicht zuletzt wurde die neue Verwendung der erfindungsgemäßen Antenne, hergestellt mit Hilfe des erfindungsgemäßen Verfahrens als transparentes, funktionales und gegebenenfalls dekoratives Einzelstück oder als transparentes Einbauteil in Fortbewegungsmitteln für den Verkehr zu Lande, zur Luft und zu Wasser sowie in Möbeln, Geräten und Gebäuden gefunden, was im Folgenden der Kürze halber als »erfindungsgemäße Verwendung« bezeichnet wird.

Im Hinblick auf den Stand der Technik war es auch für den Fachmann nicht direkt ableitbar, dass die Aufgabe, die der vorliegenden Erfindung zugrunde lag, mithilfe der erfindungsgemäßen Antenne, des erfindungsgemäßen Verfahrens und der erfindungsgemäßen Verwendung gelöst werden konnte.

Insbesondere war in Hinblick auf den Stand der Technik nicht ableitbar, dass die erfindungsgemäßen Antennen in einfacher und reproduzierbarer Weise mit dem erfindungsgemäßen Verfahren, für die erfindungsgemäße Verwendung hergestellt werden konnten und hervorragend als transparente, funktionale und/oder dekorative Einzelstücke und als transparente Einbauteile in Fortbewegungsmitteln für den Verkehr zu Lande, zur Luft und zu Wasser sowie in Möbeln, Geräten und Gebäuden verwendet werden konnten.

Die erfindungsgemäßen Antennen sind für sichtbares Licht transparent. Dies bedeutet, dass sie zumindest in einzelnen Bereichen, vorzugsweise aber insgesamt, für elektromagnetische Strahlung einer Wellenlänge von 350 bis 800 nm, durchlässig sind. »Durchlässig« bedeutet, dass die Transmission insbesondere für sichtbares Licht >50%, bevorzugt >75% und insbesondere >80% ist.

Die erfindungsgemäßen Antennen sind flächenhaft ausgeführt. Dies bedeutet, dass bei einer gegebenen erfindungsgemäßen Antenne jede der Hauptflächen (2.1n) eine sehr viel größere Fläche aufweist als der isolierende Randbereich parallel zur umlaufenden Kante des Substrates 1. Vorzugsweise ist das Verhältnis der Fläche einer Hauptfläche zur Fläche der umlaufenden Kante >2, bevorzugt >5 und insbesondere >10, besonders bevorzugt >50.

Die erfindungsgemäßen Antennen können unterschiedliche dreidimensionale Formen haben. So können sie planar oder mehr oder minder stark in einer Richtung oder in mehreren Richtungen des Raumes gebogen oder gekrümmt sein. Außerdem können sie beliebig geformte Umrisse aufweisen. Die Umrisse können symmetrisch oder asymmetrisch sein. Vorzugsweise sind sie exakt oder angenähert kreisförmig, elliptisch, dreieckig, viereckig, quadratisch trapezförmig, rautenförmig, fünfeckig oder sechseckig. Insbesondere sind sie angenähert viereckig oder trapezförmig. Dabei bedeutet »angenähert« z.B., dass bei einem angenähert viereckigen Umriss die Ecken abgerundet sein und/oder die Kanten nach innen und/oder nach außen gebogen sein können. Bevorzugt sind Umrisse, wie sie Fensterscheiben, besonders bevorzugt Windschutzscheiben, Seitenscheiben, Heckscheiben oder Glasdächer, insbesondere von Kraftfahrzeugen, aufweisen.

Die Größe der erfindungsgemäßen Antennen kann breit variieren und richtet sich nach dem jeweiligen Verwendungszweck im Rahmen der erfindungsgemäßen Verwendung. So können die erfindungsgemäßen Antennen eine Größenordnung von wenigen Zentimetern bis zu mehreren Metern haben. Insbesondere die planaren oder leicht oder stark in eine Richtung oder mehreren Richtungen des Raumes gebogenen oder gekrümmten Antennen können eine Fläche in der Größenordnung von 100 cm² bis 25 m², vorzugsweise >1 m², haben. Die erfindungsgemäßen Antennen können aber auch Flächen haben, wie sie Windschutzscheiben, Seitenscheiben, Heckscheiben und Glasdächer für Kraftfahrzeuge oder großflächige Scheiben, wie sie im Bausektor verwendet werden, üblicherweise aufweisen.

Die erfindungsgemäßen Antennen können Durchbrechungen aufweisen. Diese können der Aufnahme von Vorrichtungen zur Halterung, zur Verbindung mit anderen Gegenständen und/oder der Durchführung von Leitungen, insbesondere elektrischen Leitungen, dienen.

Die erfindungsgemäßen Antennen enthalten jeweils mindestens ein transparentes, elektrisch isolierendes Substrat. Vorzugsweise hat das Substrat für elektromagnetische Strahlung einer Wellenlänge von 350 bis 800 nm, insbesondere aber für sichtbares Licht, eine hohe Transmission, vorzugsweise eine Transmission >50%, bevorzugt >75%, besonders bevorzugt >85% und ganz besonders bevorzugt >95%.

Demgemäß sind im Grunde alle transparenten, elektrisch isolierenden Substrate geeignet, die einschließlich der metallischen Beschichtung eine solche Transmission aufweisen und die unter den Bedingungen der Herstellung und der Verwendung der erfindungsgemäßen Gegenstände thermisch und chemisch stabil sowie dimensionsstabil sind.

Die transparenten, elektrisch isolierenden Substrate können eine beliebige dreidimensionale Form aufweisen, die durch die dreidimensionalen Formen der erfindungsgemäßen Antennen, die sie enthalten, bei Verwendung als funktionales und gegebenenfalls dekoratives Einzelstück, vorgegeben sein kann. Bei Verwendung als Einbauteil ist der äußere Umriss des Substrates 1 in den meisten Fällen durch den Einbauort vorgegeben und die erfindungsgemäße Antenne entsprechend insbesondere bezüglich ihrer Segmente (2.1n) entsprechend anzupassen. Vorzugsweise hat die dreidimensionale Form keine Schattenzonen, so dass sie insbesondere aus der Gasphase gleichmäßig beschichtet werden kann. Vorzugsweise werden die vorstehend beschriebenen dreidimensionalen Formen verwendet.

Die transparenten, elektrisch isolierenden Substrate können farblos oder gefärbt sein.

Beispiele geeigneter Materialien zur Herstellung transparenter, elektrisch isolierender Substrate sind Glas und vorzugsweise starre klare Kunststoffe, wie Polystyrol, Polyamid, Polyester, Polyvinylchlorid, Polycarbonat oder Polymethylmethacrylat, Polyethylenterephtalat. Die Verwendung anderer transparenter Materialien ist jedoch nicht ausgeschlossen.
Bevorzugt werden transparente, elektrisch isolierende Substrate aus Glas verwendet. Im Grunde kommen alle üblichen und bekannten Gläser, wie sie beispielsweise in Römpp-Online 2008 unter den Stichworten »Glas«, »Hartglas« oder »Sicherheitsglas« oder in der deutschen Übersetzung des europäischen Patent EP 0 847 965 B1 mit dem Aktenzeichen DE 697 31 268 T2, Seite 8, Absatz [0053], beschrieben werden, als Substratmaterial in Betracht. Beispiele besonders gut geeigneter Gläser sind nicht vorgespanntes, teilvorgespanntes und vorgespanntes Floatglas, Gussglas und Keramikglas. Insbesondere wird Floatglas verwendet.

Die Dicke der transparenten, elektrisch isolierenden Substrate kann breit variieren und so hervorragend den Erfordernissen des Einzelfalls angepasst werden. Vorzugsweise werden Gläser mit den Standardglasstärken von 1 mm bis 24 mm verwendet.

Die transparenten, elektrisch isolierenden Substrate weisen auf einer der beiden Oberflächen einen elektrisch isolierenden, umlaufenden Randbereich auf.

Dessen elektrisch isolierende Wirkung geht auf die Abwesenheit von elektrisch leitfähigem Material zurück, d.h., bei dem umlaufenden Randbereich handelt es sich um den unbeschichteten oder nachträglich entschichteten Bereich der Oberfläche des transparenten, elektrisch isolierendes Substrats.

Die Breite des elektrisch isolierenden, umlaufenden Randbereichs kann breit variieren und daher den Erfordernissen des Einzelfalls hervorragend angepasst werden. Es ist indes ein ganz besonderer Vorteil der erfindungsgemäßen Antennen, dass der umlaufende Randbereich vergleichsweise schmal sein kann. Vorzugsweise liegt seine Breite bei 0,2 bis 1,5 cm, bevorzugt 0,3 bis 1,3 cm und insbesondere 0,4 bis 1,0 cm.

Der elektrisch isolierende, umlaufende Randbereich kann von einer dekorativen Beschichtung bedeckt sein.

Die transparenten, elektrisch isolierenden Substrate weisen auf der Oberfläche mit dem elektrisch isolierenden, umlaufenden Randbereich eine transparente, elektrisch leitfähige Beschichtung auf.

Im Folgenden wird mit »transparent« bezeichnet, dass die elektrisch leitfähigen Beschichtungen für elektromagnetische Strahlung einer Wellenlänge von 350 bis 800 nm durchlässig sind. »Durchlässig« bedeutet, dass die Transmission insbesondere für sichtbares Licht >50%, bevorzugt >75% und insbesondere >80% ist. Besonders bevorzugt sind transparente Beschichtungen, die für IR-Strahlung undurchlässig sind, d. h., dass sie IR-Strahlung reflektieren.

Im Folgenden wird mit »elektrisch leitfähig« bezeichnet, dass die transparenten, elektrisch leitfähigen Beschichtungen einen niedrigen elektrischen Flächenwiderstand R_{□} haben. Vorzugsweise liegt der elektrische Flächenwiderstand R_{□} bei 0,5 Ω/□bis 15 Ω/□.
Die transparenten, elektrisch leitfähigen Beschichtungen bedecken bis auf den elektrisch isolierenden Randbereich die Oberfläche des transparenten, elektrisch isolierenden Substrats großflächig. Vorzugsweise sind dabei mehr als 50%, bevorzugt mehr als 70%, besonders bevorzugt mehr als 80% und insbesondere mehr als 90% der Oberfläche mit der Beschichtung bedeckt.

Die transparenten, elektrisch leitfähigen Beschichtungen enthalten mindestens ein elektrisch leitfähiges Material oder bestehen hieraus.

Demnach kann eine gegebene transparente, elektrisch leitfähige Beschichtung aus einer Schicht aus einem elektrisch leitfähigen Material oder aus mindestens zwei Schichten aus zwei unterschiedlichen, elektrisch leitfähigen Materialien bestehen.

Außerdem kann die transparente, elektrisch leitfähige Beschichtung aus mindestens einer Schicht aus einem elektrisch leitfähigen Material und mindestens einer Schicht aus einem transparenten, dielektrischen Material aufgebaut sein. Beispielsweise kann die transparente, elektrisch leitfähige Beschichtung aus einer ersten Schicht aus einem transparenten, dielektrischen Material, einer Schicht aus einem elektrisch leitfähigen Material und einer zweiten Schicht aus dem gleichen oder einem anderen transparenten, dielektrischen Material bestehen, die in der angegebenen Reihenfolge übereinander liegen. Im allgemeinen Fall kann der gesamte, transparente Schichtaufbau mehrere im Wechsel folgende, unterschiedliche dielektrische Schichten und elektrisch leitfähige Schichten umfassen.

Beispiele geeigneter elektrisch leitfähiger Materialien sind Metalle mit hoher elektrischer Leitfähigkeit, wie Silber, Kupfer, Gold, Aluminium oder Molybdän, insbesondere Silber oder mit Palladium legiertes Silber, sowie transparente, elektrisch leitfähige Oxide (Transparent Conductive Oxides, TCO), wie sie beispielsweise in der amerikanischen Patentanmeldung US 2007/029186 A1 auf Seite 3, Absatz [0026], und Seite 4, Absatz [0034], beschrieben werden. Vorzugsweise handelt es sich bei den TCO um Indiumzinnoxid (Indium Tin Oxide, ITO), fluordotiertes Zinndioxid (Fluor Tin Oxide, FTO), mit Aluminium dotiertes Zinkoxid (Aluminium Zink Oxide, AZO), mit Gallium dotiertes Zinkoxid, mit Bor dotiertes Zinkoxid, Zinnzinkoxid oder mit Antimon dotiertes Zinndioxid (Antimony Tin Oxide, ATO).

Die Dicke der transparenten, elektrisch leitfähigen Beschichtungen kann breit variieren und so hervorragend den Erfordernissen des Einzelfalls angepasst werden. Wesentlich ist dabei, dass die Dicke der transparenten, elektrisch leitfähigen Beschichtungen nicht so hoch werden darf, dass der Schichtaufbau im Gesamten nach oben benannter Definition seine Transparenz verliert. Dabei stehen die maximalen Dicken im direkten Zusammenhang mit dem elektrischen Gesamt-Flächenwiderstand des Schichtaufbaus. Vorzugsweise liegt die Dicke einer gegebenen transparenten, elektrisch leitfähigen Beschichtung an jeder Stelle bei 30 nm bis 100 µm, ausgenommen in den nachfolgend beschriebenen, linienförmigen, elektrisch isolierenden Bereichen.

Besteht die transparente, elektrisch leitfähige Beschichtung aus einem TCO, beträgt ihre Dicke vorzugsweise 100 nm bis 1,5 µm, bevorzugt 150 nm bis 1 µm und insbesondere 200 nm bis 500 nm.

Besteht die transparente, elektrisch leitfähige Beschichtung aus mindestens einer transparenten, dielektrischen Schicht und mindestens einer Schicht aus einem Metall, beträgt ihre Dicke vorzugsweise 20 nm bis 100 µm, bevorzugt 25 nm bis 90 µm und insbesondere 30 nm bis 80 µm.
Beispiele transparenter Beschichtungen, die für die Herstellung der erfindungsgemäß verwendeten, strukturierten, transparenten Beschichtungen geeignet sind, sowie Verfahren zu ihrer Herstellung sind aus den Patentanmeldungen und Patentschriften
- US 4,010,304, Spalte 1, Zeile 67, bis Spalte 5, Zeile 35,
- US 4,565,719, Spalte 2, Zeile 3, bis Spalte 18, Zeile 51,
- US 4,655,811, Spalte 3, Zeile 56, bis Spalte 13, Zeile 63,
- US 4,985,312, Spalte 1, Zeile 64, bis Spalte 7, Zeile 25,
- US 5,111,329, Spalte 3, Zeile 32, bis Spalte 12,
- US 5,324,374, Spalte 2, Zeile 38, bis Spalte 6, Zeile 37,
- EP 0 638 528 A1, Seite 2, Zeile 19, bis Seite 10, Zeile 57,
- EP 0 718 250 A2, Seite 2, Zeile 42, des Seite 13, Zeile 44,
- DE 697 31 268 T2, Seite 3, Absatz [0011], bis Seite 7, Absatz [0051], Seite 8, Absatz [0060], bis Seite 13, Absatz [0091],
- WO 00/72635 A1, Seite 3, Zeile 16 bis 35, und
- US 7,223,940 B2, Spalte 5, Zeile 8, bis Spalte 6, Zeile 38,
bekannt.

Außerdem kann die transparente, elektrisch leitfähige Beschichtung auf transparenten Trägerfolien, vorzugsweise transparente Kunststofffolien, bevorzugt Kunststofffolien auf der Basis von Polyamid, Polyurethan, Polyvinylchlorid, Polycarbonat, Polyester und Polyvinylbutyral, besonders bevorzugt Polyesterfolien und insbesondere Polyethylenterephthalat-Folien, vorliegen.

Die transparenten, elektrisch leitfähigen Beschichtungen werden jeweils von mindestens zwei flächenförmigen Segmenten gebildet, die durch mindestens einen linienförmigen, elektrisch isolierenden Bereich voneinander isoliert sind. »Linienförmig« bedeutet, dass ein gegebener Bereich eine Breite hat, die sehr viel kleiner ist als seine Länge.

Die Flächen, die Umrisse und die Positionen der flächenförmigen Segmente können von Fall zu Fall sehr breit variieren und richten sich insbesondere nach der Größe der erfindungsgemäßen Antennen, d.h. nach der Fläche, die im Einzelfall für die transparenten, elektrisch leitfähigen Beschichtungen zur Verfügung steht. Außerdem richten sie sich nach der Wellenlänge der elektromagnetischen Strahlung, die empfangen oder ausgesendet werden soll. Dabei kann die Größe eines flächenförmigen Segments zum Beispiel so eingestellt werden, dass es für den Empfang von UKW (30 bis 300 MHz, entsprechend einer Freiraumwellenlänge von 10 bis 1 m), Kurzwelle (3 bis 30 MHz, entsprechend einer Freiraumwellenlänge von 100 bis 10 m) oder Mittelwelle (300 bis 3000 kHz, entsprechend einer Freiraumwellenlänge von 1000 bis 100 m) geeignet ist. Des Weiteren können zwei flächenförmige Segmente in einer erfindungsgemäßen Antenne so dimensioniert sein, dass sie für unterschiedliche Dienste genutzt werden können; so kann z.B. eines der flächenförmigen Segmente als Antenne für den Radioempfang im UKW-Bereich und das andere z.B. als Antenne für den Fernsehempfang im Band III dienen.

Um dies bei einer erfindungsgemäßen Antenne im Einzelfall zu realisieren, stehen dem Fachmann eine Vielzahl von Gestaltungsmöglichkeiten zur Verfügung. Gemäß einer Ausgestaltung, welche nicht Teil der Erfindung ist, umgibt ein linienförmiger, elektrisch isolierender Bereich mindestens ein flächenförmiges Segment umlaufend geschlossen. Erfindungsgemäß umgibt ein linienförmiger, elektrisch isolierender Bereich ein flächenförmiges Segment umlaufend offen, so dass die beiden Enden des Bereichs bis zum elektrisch isolierenden, umlaufenden Randbereich geführt sind. Es können aber auch parallel und in unterschiedlichen Abständen zum Randbereich nicht zusammenhängende, linienförmige, elektrisch isolierende Bereiche vorliegen, die von einem Randbereich zum gegenüberliegenden Randbereich reichen. Bei der letztgenannten Ausführungsform besteht die Möglichkeit, dass mindestens eines der flächenförmigen Segmente zur Beheizung der erfindungsgemäßen Antenne genutzt werden kann. Es kann sich aber auch innerhalb eines flächenförmigen Segments, das offen umlaufend von einem linienförmigen, elektrisch isolierender Bereich umgeben ist, ein separater, gerader, linienförmiger, elektrisch isolierender Bereich befinden, der eine Länge hat, die etwa der Hälfte der Wellenlänge des zu empfangenden Funkdienstes entspricht, so dass eine Schlitzantenne resultiert.

Eine weitere Ausführungsform, welche nicht Teil der Erfindung ist, ergibt sich wenn parallel zu einem ersten linienförmigen, elektrisch isolierenden, umlaufend geschlossen Bereich, dazu vorzugsweise parallel, ein zweiter oder auch mehrere weitere linienförmige, elektrisch isolierende, umlaufend geschlossene Bereiche befinden, wobei die linienförmigen, elektrisch isolierenden, umlaufend geschlossenen Bereiche mindestens ein zentrales, flächenförmiges, elektrisch leitfähiges Segment umlaufend geschlossen umgeben. Zwischen den linienförmigen, elektrisch isolierenden, umlaufend geschlossen Bereichen ergeben sich dann elektrisch leitende, umlaufend geschlossene Segmente, welche zusätzlich durch linienförmige elektrisch isolierende Bereiche unterteilt werden können.

Vorzugsweise werden die linienförmigen, elektrisch isolierenden Bereiche von Bereichen gebildet, die frei von elektrisch leitfähigem Material sind. Ihre Breite kann von Fall zu Fall variieren und so hervorragend den Erfordernissen des Einzelfalls angepasst werden. Vorzugsweise liegt die Breite bei 10 bis 200 µm, bevorzugt 25 bis 175 µm und insbesondere 50 bis 150 µm. Im Allgemeinen können Bereiche dieser Breite von einem Betrachter nicht mehr optisch wahrgenommen werden. Auch ihre Tiefe kann variieren und so hervorragend den Erfordernissen des Einzelfalls angepasst werden. Vorzugsweise reicht ihre Tiefe vor der Oberfläche der transparenten, elektrisch leitfähigen Beschichtung bis zur Oberfläche des transparenten, elektrisch isolierenden Substrats.

Mindestens eines der vorstehend beschriebenen, flächenförmigen Segmente weist einen Anschluss zum galvanischen, kapazitiven oder induktiven Auskoppeln des empfangenen Antennensignals auf. Erfindungsgemäß wird wenigstens eine Antennenstruktur zum Senden und/oder Empfangen verwendet.

Zusätzlich kann noch mindestens ein weiterer galvanischer, kapazitiver oder induktiver Anschluss in einem anderen flächenförmigen Segment vorhanden sein, der als Gegenpol oder Masse zum anderen Anschluss oder zum Auskoppeln eines weiteren Antennensignals dienen kann. Induktive Kopplung wird in DE 10 2005 042 960 A1 erwähnt.

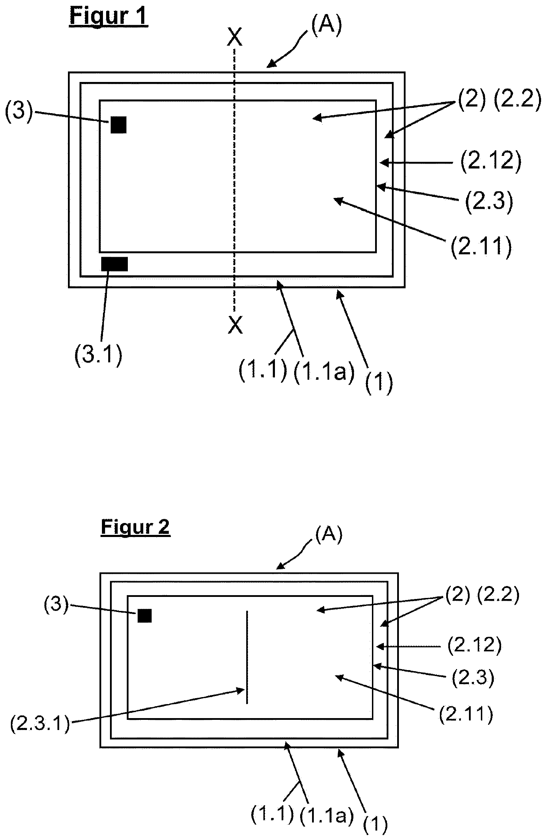

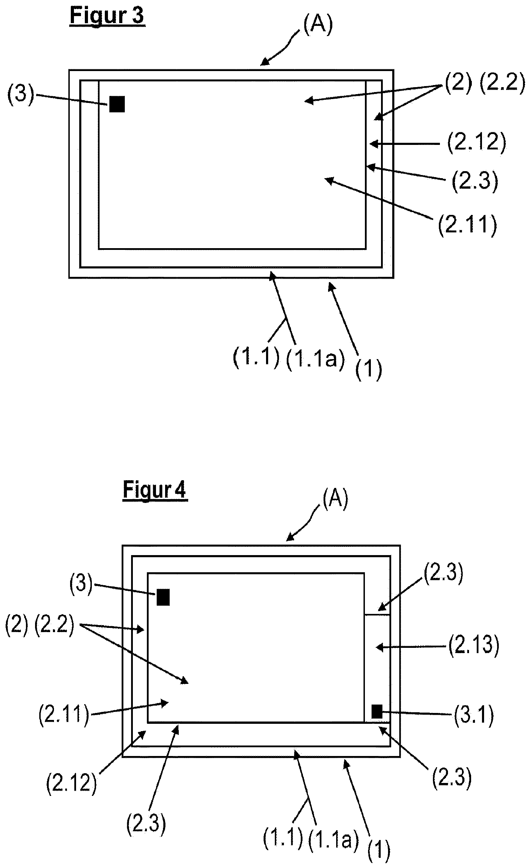

Beispiele geeigneter galvanischer Anschlüsse, mit denen ein einwandfreier Übergang von der sehr dünnen transparenten, elektrisch leitfähigem Beschichtung auf die üblichen Dimensionen von Kabeln und Steckern bewerkstelligt werden kann, sind aus dem amerikanischen Patent US 7,223,940 B2, Spalte 1, Zeile 55, bis Spalte 2, Zeile 43, und Spalte 6, Zeile 48, bis Spalte 9, Zeile 59, in Verbindung mit den Figuren 1 bis 9 bekannt.

Beispiele geeigneter kapazitiver Anschlüsse oder Koppelelemente sind aus der deutschen Patentanmeldung DE 103 19 606 A1, Absätze [0010] bis [0039], in Verbindung mit den Figuren 1 bis 3 oder der deutschen Patentanmeldung DE 198 32 228 A1, Spalte 1, Zeile 56, bis Spalte 4, Zeile 41, in Verbindung mit den Figuren 1 bis 3 bekannt.

Vorzugsweise werden kapazitive Anschlüsse oder Koppelelemente verwendet.

Die mithilfe der vorstehend beschriebenen Anschlüsse ausgekoppelten Antennensignale werden über übliche und bekannte elektronische Bauteile, wie Anpassnetzwerke (vgl. z.B. die deutsche Patentanmeldung DE 10 2005 058875 A1) und Antennenverstärker, zum Empfänger, wie z.B. ein Radio, ein Fernseher, ein Navigationsgerät, eine Uhr, ein Messgerät, eine elektronische Anzeige oder ein Computer, weitergeführt.

Darüber hinaus können die transparenten elektrisch leitfähigen Beschichtungen der erfindungsgemäßen Antennen je nach ihrer stofflichen Zusammensetzung weitere Funktionen, wie z.B. die Reflektion oder die Absorption von Infrarotstrahlung zu Zwecken der Thermoregulierung oder Wärmeisolation oder des Sonnenschutzes, erfüllen.

Die erfindungsgemäßen Antennen können noch weitere funktionale Schichten enthalten.

Bestehen beispielsweise ihre transparenten, isolierenden Substrate aus Glas, können sie zwischen den transparenten, elektrisch leitfähigen Beschichtungen und der Oberfläche der Substrate transparente Barriereschichten zur Verhinderung der Diffusion von Ionen, insbesondere von Alkalimetallionen, enthalten. Geeignete Barriereschichten bestehen vorzugsweise aus dielektrischen Materialien, insbesondere aus Nitriden, Oxiden und Oxidnitriden von Silicium und/oder Aluminium. Vorzugsweise haben sie eine Dicke von 30 bis 300 nm.

Außerdem können sie zwischen den transparenten, elektrisch leitfähigen Beschichtungen und der Oberfläche der Substrate transparente, haftvermittelnde Schichten enthalten. Vorzugsweise bestehen diese ebenfalls aus dielektrischen Materialien, insbesondere aus gemischten Oxiden von Zink und Zinn. Vorzugsweise haben sie eine Dicke von 3 bis 100 nm.

Liegen sowohl eine transparente Barriereschicht als auch eine transparente haftvermittelnde Schicht vor, ist die transparente Barriereschicht direkt mit der Oberfläche des transparenten, elektrisch isolierenden Substrats verbunden.

Des Weiteren können die erfindungsgemäßen Antennen noch Farb-Reflexionsfolien, UV- oder IR-Reflexionsfolien, Tönungsfolien oder Wärmeschutzfolien enthalten.

Darüber hinaus können die erfindungsgemäßen Antennen jeweils noch mindestens ein, insbesondere ein, zweites transparentes, elektrisch isolierendes Substrat enthalten, das vorzugsweise über mindestens eine, insbesondere eine, reißfeste, haftvermittelnde Schicht mit dem ersten transparenten, elektrisch isolierenden Substrat, auf dem sich die transparente, elektrisch leitfähige Beschichtung befindet, haftfest verbunden ist. Dabei bedeutet »haftfest«, dass die betreffenden Schichten auf Dauer miteinander verbunden sind und sich nicht mehr voneinander trennen lassen, ohne mindestens eine hiervon schwer zu beschädigen oder gar zu zerstören.

Bei dieser Ausführungsform kann sich die transparente, elektrisch leitfähige Beschichtung auf der Oberfläche des ersten transparenten, elektrisch isolierenden Substrats befinden, die der transparenten, reißfesten, haftvermittelnden Schicht abgewandt ist. Vorzugsweise befindet sich aber die transparente, elektrisch leitfähige Beschichtung auf der Oberfläche des ersten transparenten, elektrisch isolierenden Substrats, die der transparenten, reißfesten, haftvermittelnden Schicht zugewandt ist. Bei dieser bevorzugten Ausführungsform ist die transparente, elektrisch leitfähige Beschichtung, inklusive die auf einer Trägerfolie befindliche Beschichtung, in die transparente, reißfeste, haftvermittelnde Schicht eingebettet.

Als zweite transparente, elektrisch isolierende Substrate können die vorstehend beschriebenen Substrate verwendet werden. Dabei können in einer gegebenen erfindungsgemäßen Antenne die beiden Substrate gleich oder voneinander verschieden sein; vorzugsweise sind sie gleich.

Die transparenten, reißfesten, haftvermittelnden Schichten zeigen im Zugversuch eine hohe Reißdehnung oder Bruchdehnung. Vorzugsweise ist die Reißdehnung >50%.

»Haftvermittelnd« bedeutet, dass die betreffenden Schichten eine hohe Zwischenschichthaftung aufweisen, die vorzugsweise so hoch ist, dass die verbundenen Schichten nicht mehr voneinander getrennt werden können, ohne sie dabei schwer zu beschädigen oder gar zu zerstören.

Die Dicke der transparenten, reißfesten, haftvermittelnden Schichten kann breit variieren und daher den Erfordernissen des Einzelfalls hervorragend angepasst werden. Vorzugsweise sind die Schichten 0,1 bis 10 mm, bevorzugt 0,2 bis 5 mm, besonders bevorzugt 0,3 bis 1 mm dick.

Als Materialien für die Herstellung der transparenten, reißfesten, haftvermittelnden Schichten kommen grundsätzlich alle Materialien in Betracht, die das vorstehend beschriebene erforderliche Eigenschaftsprofil aufweisen. Vorzugsweise wird das Material aus der Gruppe, bestehend aus thermisch und/oder mit aktinischer Strahlung gehärteten Gießharzen und reißfesten Klebstofffolien, ausgewählt.

Bekanntermaßen werden thermisch gehärtete Gießharze aus thermisch härtbaren Gießharzen hergestellt, die komplementäre reaktive funktionelle Gruppen enthalten, die unter der Einwirkung von Wärmeenergie miteinander reagieren, so dass sich in dem gehärteten Gießharz ein dreidimensionales Netzwerk bildet. Beispiele geeigneter thermisch härtbarer Gießharze sind Epoxidharze, wie sie beispielsweise in Römpp Online 2008 unter dem Stichwort »Epoxidharze« beschrieben werden.

Bekanntermaßen werden mit aktinischer Strahlung gehärtete Gießharze aus Gießharzen hergestellt, die reaktive funktionelle Gruppen enthalten, die unter der Einwirkung von aktinischer Strahlung anionisch, kationisch oder radikalisch, insbesondere radikalisch, polymerisieren. Insbesondere handelt es sich bei den reaktiven funktionellen Gruppen um olefinisch ungesättigte Doppelbindungen. Beispiele geeigneter mit aktinischer Strahlung härtbarer Gießharze sind aus Römpp Online 2008, »Strahlenhärtende Systeme« und »Strahlenhärtung«, bekannt. Als aktinische Strahlung kommt elektromagnetische Strahlung, wie nahes Infrarot (NIR), sichtbares Licht, UV-Strahlung, Röntgenstrahlung und Gammastrahlung, oder Korpuskularstrahlung, wie Elektronenstrahlung, Protonenstrahlung, Betastrahlung oder Alphastrahlung, in Betracht.

Die Gießharze können übliche und bekannte Haftvermittler, wie sie beispielsweise in der europäischen Patentanmeldung EP 0 799 949 A1, Spalte 6, Zeilen 24 bis 32, beschrieben werden, enthalten.

Vorzugsweise werden die reißfesten Klebstofffolien aus der Gruppe, bestehend aus Polyvinylbutyral, PVB, Poly(ethylen-vinylacetat), EVA, Polyethylenterephthalat, PET, Polyvinylchlorid, PVC, lonomerharzen auf der Basis von Ethylen und/oder Propylen und alpha,beta-ungesättigten Carbonsäuren oder Polyurethan, PU, ausgewählt. Insbesondere werden Polyurethanfolien eingesetzt.

Vorzugsweise haben in der vorstehend beschriebenen Ausführungsform der erfindungsgemäßen Antennen die zweiten transparenten, elektrisch isolierenden Substrate und die transparenten, reißfesten, haftvermittelnden Schichten im Wesentlichen oder genau die gleichen Abmessungen wie die ersten transparenten, elektrisch isolierende Substrate, so dass sie passgenau miteinander verbunden werden können. Dies gilt auch für die Ausführungsformen, bei denen die erfindungsgemäßen Antennen in mindestens einer Richtung des Raumes gebogen sind.

Die erfindungsgemäßen Antennen können in der unterschiedlichsten Art und Weise hergestellt werden.

Beispielsweise kann auf das transparente, elektrisch isolierende Substrat eine Maske aufgelegt werden, die der gewünschten Struktur der linienförmigen, elektrisch isolierenden Bereiche sowie der elektrisch isolierenden, umlaufenden Randbereiche, die frei von elektrisch leitfähigem Material frei bleiben sollen, entspricht. Anschließend kann mindestens ein elektrisch leitfähiges Material auf dem Substrat aus der Gasphase abgeschieden werden, wobei die nachstehend beschriebenen Verfahren verwendet werden können. Dabei entsteht direkt die vorstehend beschriebene segmentierte, transparente, elektrisch leitfähige Beschichtung. Anschließend wird die Maske entfernt, und die segmentierte, transparente, elektrisch leitfähige Beschichtung wird mit mindestens einem der vorstehend beschriebenen galvanischen, oder induktiven kapazitiven Anschlüsse versehen.

Erfindungsgemäß ist es indes von Vorteil, die erfindungsgemäßen Antennen mithilfe des erfindungsgemäßen Verfahrens herzustellen. Andererseits kann das erfindungsgemäße Verfahren auch zur Herstellung anderer transparenter Gegenstände als die erfindungsgemäßen Antennen verwendet werden. Seine besonderen Vorteile entfaltet das erfindungsgemäße Verfahren aber insbesondere bei der Herstellung der erfindungsgemäßen Antennen.

Vor der Durchführung des ersten Verfahrenschritts kann das transparente, elektrisch isolierende Substrat thermisch behandelt, gereinigt, insbesondere entfettet, und/oder poliert werden. Anschließend kann mindestens eine der vorstehend beschriebenen Barriereschichten und/oder haftvermittelnden Schichten aufgetragen werden, wobei die nachstehend beschriebenen Verfahren zur Abscheidung dünner Schichten aus der Gasphase verwendet werden können.

Im ersten Verfahrenschritt des erfindungsgemäßen Verfahrens wird ein Laminat (A') hergestellt, das mindestens ein, insbesondere ein, elektrisch isolierendes Substrat, das auf einer seiner Oberflächen einen umlaufenden, elektrisch isolierenden Randbereich aufweist, und eine nicht segmentierte, elektrisch leitfähige Beschichtung, die das Substrat bis auf den Randbereich großflächig bedeckt und mindestens ein elektrisch leitfähiges Material enthält oder hieraus besteht, umfasst. Bevorzugt ist das Laminat (A') exakt planar.

Zu diesem Zweck wird mindestens ein elektrisch leitfähiges Material großflächig auf eine Oberfläche des transparenten, elektrisch leitfähigen Substrats oder auf die Oberfläche einer hierauf befindlichen Schicht appliziert, so dass eine nicht segmentierte, transparente, elektrisch leitfähige Beschichtung resultiert, die das elektrisch leitfähige Material enthält oder hieraus besteht. Dabei kann eine Maske aufgelegt werden, die den Randbereich der Oberfläche des Substrats abdeckt, so dass direkt der elektrisch isolierende, umlaufende Randbereich resultiert. Vorzugsweise wird die gesamte Oberfläche des Substrats beschichtet. Besonders bevorzugt wird ein exakt planares Substrat verwendet.

Für die Beschichtung oder Applikation können an sich bekannte Methoden und Vorrichtungen, wie z.B. die Abscheidung aus der Gasphase, die Applikation aus der flüssigen Phase oder die Laminierung von Kunststofffolien, die mit elektrisch leitfähigen Materialien beschichtet sind, verwendet werden.

Vorzugsweise wird die nicht segmentierte, transparente, elektrisch leitfähige Beschichtung aus der Gasphase abgeschieden, wobei übliche und bekannte Verfahren wie chemische Glasphasenabscheidung (CVD) oder physikalische Gasphasenabscheidung (PVD) sowie die entsprechenden hierfür geeigneten Vorrichtungen verwendet werden können. Beispiele für CVD-Verfahren sind Sprühpyrolyse, chemische Dampfabscheidung und Sol-Gel-Abscheidung. Beispiele für PVD-Verfahren sind Elektronenstrahl-Verdampfung und Vakuum-Sputtering.

Vorzugsweise werden Sputtering-Verfahren angewandt.

Sputtering ist eine übliche und bekannte Methode zur Herstellung dünner Schichten aus Materialien, die sich nicht ohne weiteres verdampfen lassen. Dabei wird die Oberfläche eines Festkörpers geeigneter Zusammensetzung, das so genannte Target, durch Beschuss mit energiereichen Ionen aus Niederdruckplasmen, wie zum Beispiel Sauerstoffionen (O⁺) und/oder Argonionen (Ar⁺), oder Neutralteilchen zerstäubt, wonach die zerstäubten Materialien auf Substraten in der Form dünner Schichten abgeschieden werden (vgl. Römpp Online, 2008, »Sputtering«). Vorzugsweise wird das Hochfrequenz-Sputtering, kurz HF-Sputtering, oder das Magnetfeld-unterstützte Sputtering, kurz Magnetron-Sputtering (MSVD), angewandt.

Geeignete Sputtering-Verfahren werden beispielsweise in den amerikanischen Patenten US 7,223,940 B2, Spalte 6, Zeilen 25 bis 38, und US 4,985,312, Spalte 4, Seite 18, bis Spalte 7, Zeile 10, oder in der deutschen Übersetzung des europäischen Patents EP 0 847 965 B1 mit dem Aktenzeichen DE 697 31 268 T2, Seite 8, Absatz [0060], und Seite 9, Absatz [0070], bis Seite 10, Absatz [0072], beschrieben.

Im zweiten Verfahrenschritt des erfindungsgemäßen Verfahrens wird die nicht segmentierte, elektrisch leitfähige, transparente Beschichtung in mindestens zwei flächenförmige, elektrisch leitfähige Segmente unterteilt, indem man an den gewünschten Stellen das elektrisch leitfähige Material entfernt. Gegebenenfalls kann man in dieser Weise auch den elektrisch isolierenden, umlaufenden Randbereich herstellen.

Das elektrisch leitfähige Material kann mechanisch, thermisch und/oder durch Bestrahlung mit elektromagnetischer Strahlung oder Korpuskularstrahlung, vorzugsweise mit elektromagnetischer Strahlung, entfernt werden.

Ein vorteilhaftes Verfahren zur mechanischen Entfernung des elektrisch leitfähigen Materials zur Herstellung der linienförmigen, elektrisch isolieren Bereiche, das sehr präzise arbeitet und besonders feine Bereiche liefert, ist das Ultraschallhämmern.

Ein vorteilhaftes Verfahren zur Entfernung des elektrisch leitfähigen Materials zur Herstellung der linienförmigen, elektrisch isolierenden Bereiche durch thermische Einwirkung und/oder durch Bestrahlung mit elektromagnetischer Strahlung, das ebenfalls sehr präzise arbeitet und besonders feine Bereiche liefert, ist das Bestrahlen mit einem fokussierten Laserstrahl, wie dies beispielsweise in den europäischen Patentanmeldungen EP 0 827 212 A2 und EP 1 104 030 A2 beschrieben wird. Vorzugsweise wird ein Neodym:YAG-Laser einer Wellenlänge des emittierten Lichts von 523 nm verwendet.

Zur Herstellung des elektrisch isolierenden, umlaufenden Randbereichs wird das elektrisch leitfähige Material vorzugsweise durch mechanische Verfahren wie Schleifen abgetragen.

Anschließend wird im dritten Verfahrenschritt des erfindungsgemäßen Verfahrens mindestens eines der resultierenden flächenförmigen Segmente mit einem Anschluss zum späteren galvanischen oder kapazitiven Auskoppeln des Antennensignals ausgerüstet, so dass die erfindungsgemäße Antenne resultiert.

Vor der Durchführung des dritten Verfahrenschritts kann das mit der segmentierten, transparenten, elektrisch leitfähige Beschichtung beschichtete, transparente, elektrisch isolierende Substrat bei höheren Temperaturen verformt, insbesondere in mindestens eine Richtung des Raumes gebogen oder gekrümmt werden. Hierbei kann eine Wärmebehandlung vom Typ Biegen/Vorspannen oder Abkühlen im Kühlofen angewandt werden.
Die Höhe der Temperaturen richtet sich nach den Materialien, aus denen die jeweiligen transparenten, elektrisch isolierenden Substrate und/oder die transparenten, elektrisch leitfähigen Beschichtungen bestehen. Enthalten sie Kunststoff oder bestehen sie hieraus, darf die Temperatur nicht so hoch eingestellt werden, dass das Material schmilzt und/oder thermisch geschädigt wird. Vorzugsweise liegt die Temperatur in diesen Fällen oberhalb der Glasübergangstemperatur der Kunststoffe und unterhalb 200°C. Im Falle von Substraten aus Glas liegt die Temperatur zwischen 500 und 700°C, insbesondere 550 und 650°C.

Vor oder nach der Durchführung des dritten Verfahrenschritts oder vor oder nach der Verformung kann der elektrisch isolierende, umlaufende Randbereich und/oder die galvanischen oder kapazitiven Anschlüsse z.B. durch Keramikdruck mit einer dekorativen Beschichtung versehen werden, um den Übergang von Randbereich zu transparenter, elektrisch leitfähiger Beschichtung und/oder die Anschlüsse optisch zu verdecken.

Die erfindungsgemäßen Antennen, insbesondere die mithilfe des erfindungsgemäßen Verfahrens hergestellten erfindungsgemäßen Antennen, können vielseitig verwendet werden.

Mit besonderem Vorteil werden sie im Rahmen der erfindungsgemäßen Verwendung als transparente Einbauteile in Fortbewegungsmitteln für den Verkehr zu Lande, zur Luft und zu Wasser, vorzugsweise in Kraftfahrzeugen, wie Pkw, Lastkraftwagen und Zügen, in Luftfahrzeugen und in Schiffen sowie in Möbeln, Geräten und Gebäuden verwendet. Insbesondere werden sie in der Form von Windschutzscheiben, Seitenscheiben, Heckscheiben und Glasdächern in Kraftfahrzeuge eingebaut.

Außerdem können sie mit besonderem Vorteil als transparente, funktionale und/oder dekorative Einzelstücke, wie z.B. freistehende, transparente, dekorative Einzelstücke, die gegebenenfalls zusätzliche dekorative Elemente aufweisen, verwendet werden.

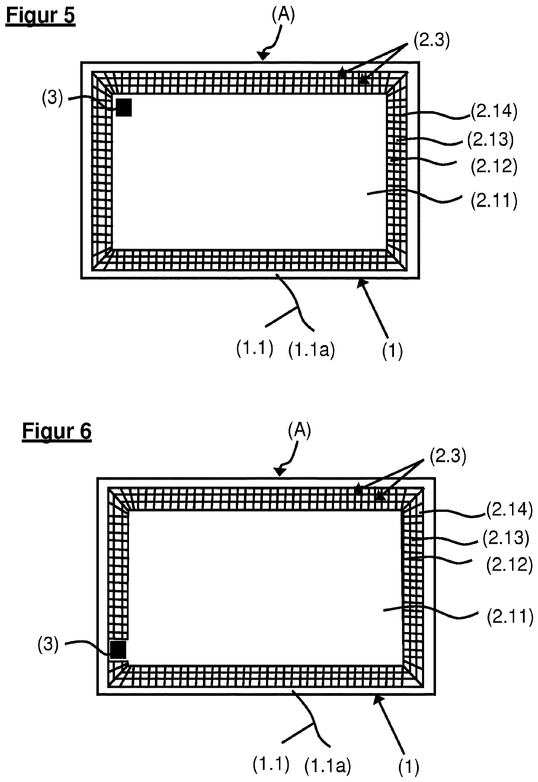

Im Folgenden wird die erfindungsgemäße Antenne anhand der Figuren 6 bis 10 und 14 beispielhaft erläutert. Bei den Figuren 6 bis 10 und 14 handelt es sich um schematische Darstellungen, die das Prinzip der Erfindung veranschaulichen sollen. Die schematischen Darstellungen brauchen daher nicht maßstabsgetreu zu sein. Die dargestellten Größenverhältnisse müssen daher auch nicht den bei der Ausübung der Erfindung in der Praxis angewandten Größenverhältnissen entsprechen.
Figur 1 zeigt eine Antenne in Aufsicht, welche nicht Teil der Erfindung ist.
Figur 2 zeigt eine Antenne in Aufsicht, welche nicht Teil der Erfindung ist.
Figur 3 zeigt eine Antenne in Aufsicht, welche nicht Teil der Erfindung ist.
Figur 4 zeigt eine Antenne in Aufsicht, welche nicht Teil der Erfindung ist.
Figur 5 zeigt eine Antenne in Aufsicht, welche nicht Teil der Erfindung ist.
Figur 6 zeigt eine Ausführungsform der erfindungsgemäßen Antenne in Aufsicht.
Figur 7 zeigt eine weitere Ausführungsform der erfindungsgemäßen Antenne in Aufsicht.
Figur 8 zeigt eine weitere Ausführungsform der erfindungsgemäßen Antenne in Aufsicht.
Figur 9 zeigt eine weitere Ausführungsform der erfindungsgemäßen Antenne in Aufsicht.
Figur 10 zeigt eine weitere Ausführungsform der erfindungsgemäßen Antenne in Aufsicht.
Figur 11 zeigt den Querschnitt durch eine Alternative der Antenne gemäß der Figur 1 längs der Linie X ------- X.
Figur 12 zeigt den Querschnitt durch eine weitere Alternative der Antenne gemäß der Figur 1 längs der Linie X ------- X.
Figur 13 zeigt den Querschnitt durch eine Antenne gemäß der Figur 1 längs der Linie X-X mit einer PET-Folie als Trägersubstrat für die leitfähige Beschichtung.
Figur 14 zeigt den Querschnitt durch eine erfindungsgemäße Antenne gemäß der Figur 9 längs der Linie Y ------- Y mit einem Anschlussleiter.

In den Figuren 1 bis 14 haben die Bezugszeichen die folgende Bedeutung:
(A) Antenne,
   (1) transparentes, elektrisch isolierendes Substrat,
   (1.1) beschichtete Oberfläche des transparenten, elektrisch isolierenden Substrats,
   (1.1a) elektrisch isolierender, umlaufender Randbereich,
   (2) transparente, elektrisch leitfähige Beschichtung,
   (2.11) flächenförmiges Segment (2.1n) mit n = 1,
   (2.12) flächenförmiges Segment (2.1n) mit n = 2 oder unterteiltes flächenförmiges Segment (2.1n) mit n = 2,
   (2.13) flächenförmiges Segment (2.1n) mit n = 3 oder unterteiltes flächenförmiges Segment (2.1n) mit n = 3,
   (2.14) flächenförmiges Segment (2.1n) mit n = 4 oder unterteiltes flächenförmiges Segment (2.1n) mit n = 4,
   (2.15) flächenförmiges Segment (2.1n) mit n = 5
   (2.2) elektrisch leitfähiges Material,
   (2.3) linienförmiger, elektrisch isolierender Bereich,
   (3) kapazitiver Anschluss oder galvanischer Anschluss zum Auskoppeln des Antennensignals,
   (3.1) kapazitiver Anschluss oder galvanischer Anschluss zum Auskoppeln eines zweiten Antennensignals oder als Gegenpol oder Masse zum kapazitiven Anschluss (3),
   (4) zweites transparentes, elektrisch isolierendes Substrat,
   (5) transparente, reißfeste, haftvermittelnde Schicht,
   X --- X Querschnittslinie
   Y --- Y Querschnittslinie
   (6) PET-Folie als Trägersubstrat für die leitfähige Beschichtung.
   (7) galvanischer, induktiver oder kapazitiver Anschlussleiter

Im Folgenden werden die erfindungsgemäßen Antennen der Figuren 6 bis 10 und 14 der Kürze halber als »erfindungsgemäße Antennen 6 bis 10 und 14« bezeichnet.

Bei den Substraten (1) der erfindungsgemäßen Antennen 6 bis 10 und 14 sowie bei dem Substrat (4) der erfindungsgemäßen Antenne 9, 10 und 14 handelt es sich um Floatglasscheiben der Abmessungen, wie sie beispielsweise für Windschutzscheiben, Seitenscheiben, Heckscheiben oder Glasdächer im Fahrzeugbau, in kleinen, mittleren oder großflächigen Scheiben in Möbeln, Geräten oder Gebäuden verwendet werden. Die Abmessungen können mehrere Quadratzentimeter bis mehrere Quadratmeter betragen.

Bei den Beschichtungen (2) der erfindungsgemäßen Antennen 6 bis 10 und 14 handelt es sich jeweils um eine Beschichtung, wie sie in der deutschen Übersetzung des europäischen Patents EP 0 847 965 B1 mit dem Aktenzeichen DE 697 31 2 168 T2, Beispiel 1, Seite 9, Absatz [0063], bis Seite 11, Absatz [0080], beschrieben wird. Diese Schicht enthält zwei Schichten aus Silber als elektrisch leitfähigem Material (2.2).

Die Beschichtungen (2) der erfindungsgemäßen Antennen 6 bis 10 und 14 bedecken bis auf den Randbereich (1.1a) einer Breite von 7,5 mm die Oberfläche (1.1) der Substrate (1).

In die Beschichtungen (2) der erfindungsgemäßen Antennen 6 bis 10 und 14 sind linienförmige, elektrisch isolierende Bereiche (2.3) eingeschrieben. Sie weisen eine Breite von 100 µm und eine Tiefe, die von der Oberfläche der Beschichtungen (2) bis zur Oberfläche (1.1) reicht, auf.

Durch die linienförmigen, elektrisch isolierenden Bereiche (2.3) werden die flächenförmigen Segmente (2.1n) mit n = 1 oder eine ganze Zahl >1 definiert. Dabei gibt die höchste Zahl n die Anzahl der jeweils vorhandenen flächenförmigen Segmente in einer Beschichtung (2) an. So weist z.B. die Bezeichnung (2.13) darauf hin, dass drei flächenförmige Segmente (2.1n) vorhanden sind.

Dabei enthält die Beschichtung (2) der Antenne 1 einen im Wesentlichen parallel zum Randbereich (1.1a) geschlossen umlaufenden, linienförmigen, elektrisch isolierenden Bereich, so dass zwei flächenförmige Segmente (2.11) und (2.12) resultieren, wobei das flächenförmige Segment (2.12) das flächenförmige Segment (2.11) geschlossen umgibt. Das von dem Segment (2.11) empfangene Signal wird über einen üblichen und bekannten kapazitiven Anschluss (3) ausgekoppelt. Das Segment (2.12) kann einen weiteren üblichen und bekannten kapazitiven Anschluss (3.1) enthalten, der als Gegenpol oder Masse zum Anschluss (3) dient.

Die Konfiguration der Antenne 2 entspricht derjenigen der Antenne 1 mit dem Unterschied, dass das Segment (2.11) der Antenne 2 zusätzlich noch einen geraden, linienförmigen, elektrisch isolierender Bereich (2.3.1) enthält, dessen Länge in etwa der Wellenlänge des zu empfangenden Funkdienstes entspricht, so dass das Segment (2.11) die Konfiguration einer Schlitzantenne hat.

Die Konfiguration der Antenne 3 entspricht ebenfalls derjenigen der Antenne 1 mit dem Unterschied, dass Bereich (2.3) das Segment (2.11) offen umläuft, so dass seine beiden Enden in den Randbereich (1.1a) übergehen.

Die Konfiguration der Antenne 4 entspricht wiederum derjenigen der Antenne 1 mit dem Unterschied, dass das umlaufende Segment (2.12) durch zwei weitere Bereiche (2.3) unterteilt wird, so dass ein drittes Segment (2.13) resultiert. Jedes der Segmente (2.11) und (2.13) hat einen kapazitiven Anschluss (3) und (3.1), die dem Auskoppeln unterschiedlicher Antennensignale dienen. So kann z.B. ein Segment (2.11) oder (2.13) dem Radioempfang und das andere Segment (2.13) und (2.11) dem Fernsehempfang dienen.

Bei der Antenne 5 und den erfindungsgemäßen Antennen 6 bis 10 sind die mindestens drei rahmenförmigen Segmente (2.12)(2.13)(2.14) durch eine Vielzahl linienförmig elektrisch isolierender Bereiche (2.3) unterteilt, die quer durch die Segmente (2.12)(2.13)(2.14) verlaufen. Somit ergeben sich innerhalb der Segmente (2.12)(2.13)(2.14) eine Vielzahl elektrisch leitender Bereiche, die aber durch die elektrisch isolierenden Bereiche (2.3) voneinander getrennt sind. Die Vielzahl elektrisch leitender Bereiche ist bevorzugt quadratisch. Die Kantenlängen der Vielzahl der elektrisch leitenden Bereiche sind erfindungsgemäß deutlich kleiner als die Wellenlängen der zu empfangenden oder zu sendenden Strahlung, nämlich um den Faktor 10 bis 10000. Die Kantenlänge der Vielzahl von elektrisch leitenden Strukturen beträgt bevorzugt von 1 mm bis 6 mm und besonders bevorzugt von 2 mm bis 4 mm.

In der Antenne 5 bilden die Vielzahl der elektrisch leitenden Bereiche umlaufend geschlossene, rahmenförmige Segmente (2.12)(2.13)(2.14). Die Rahmenbreite der Summe der rahmenförmigen Segmente (2.12)(2.13)(2.14) beträgt 10 mm bis 50 mm, bevorzugt 20 mm bis 45 mm. Mit den Segmenten (2.12)(2.13)(2.14) wird eine ausreichende Entkopplung des Segmentes (2.11) von der Fahrzeugkarosserie erzielt. Die Anordnung ist besonders günstig, um eine hohe Empfangsqualität im Segment (2.11) zu erzielen.

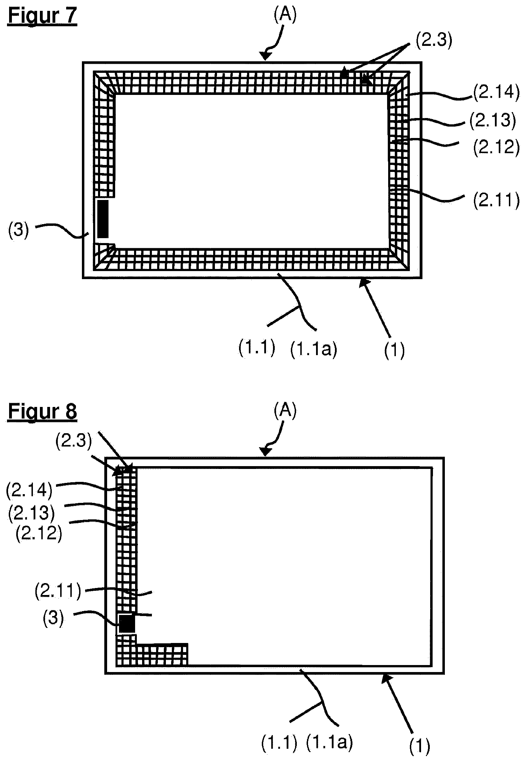

Die erfindungsgemäßen Antennen der Figuren 6 und 7 sind eine erfindungsgemäße Fortführung des Ausführungsbeispiels der Figur 5. In den mindestens drei rahmenförmigen Segmenten (2.12)(2.13)(2.14) sind im Bereich des Anschlusses (3) die querlaufenden und in Teilbereichen auch die rahmenförmig laufenden isolierenden Bereiche (2.3) unterbrochen. Das Segment (2.11) wird im Kontaktbereich (3) bis zum entschichteten Randbereich (1.1a) fortgeführt. Die Breite der Unterbrechung beträgt bevorzugt 20 mm bis 100 mm, bevorzugt 30 mm bis 90 mm. Dies ist besonders bei der galvanischen Auskopplung des Antennensignals günstig. Die Breite der Unterbrechung beträgt bei kapazitiver Kopplung, bevorzugt 100 mm bis 400 mm und besonders bevorzugt 120 mm bis 180 mm. Es wird eine verbesserte kapazitive Auskopplung des Antennensignals erzielt.

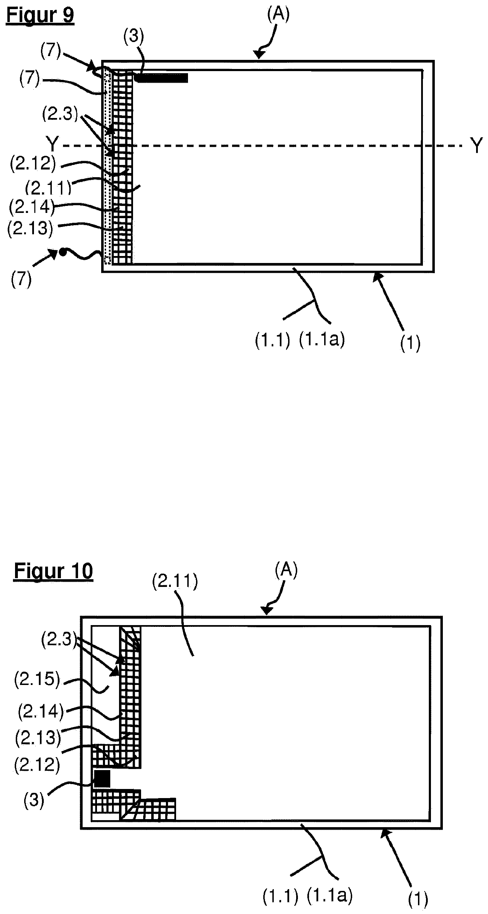

Die erfindungsgemäßen Antennen der Figuren 8 und 10 sind erfindungsgemäße Fortführungen des Ausführungsbeispiels der Figur 6. Die mindestens drei Segmente (2.12)(2.13)(2.14) sind nur als Teilrahmen ausgebildet und umrahmen das Segment (2.11) nur in Teilbereichen des Substrates (1), in dem eine Entkopplung von der Fahrzeugkarosserie besonders wichtig ist, beispielsweise im Bereich des Anschlusses (3). Die Länge der Segmente (2.12)(2.13)(2.14) beträgt pro Kante des Substrates (1) bevorzugt 50 mm bis 2000 mm, besonders bevorzugt 100 mm bis 300 mm und ganz besonders bevorzugt 120 mm bis 300 mm. Bei dem minimierten Umlauf der Segmente (2.12)(2.13)(2.14), insbesondere im Bereich des Anschlusses (3) wird erfindungsgemäß eine ausreichende Entkopplung des Segmentes (2.11) von der Fahrzeugkarosserie erzielt.

In Figur 10 sind erfindungsgemäß die mindestens drei Segmente (2.12)(2.13)(2.14) durch ein 10 mm bis 50 mm, bevorzugt 20 mm bis 45 mm breites Segment (2.15) von dem Randbereich (1.1a) getrennt. Zur Gewährleistung einer ausreichenden galvanischen, kapazitiven oder induktiven Auskopplung des Antennensignals ist im Bereich des galvanischen, kapazitiven oder induktiven Anschlusses (3) das Segment (2.15) durch einen um 10 mm bis 50 mm, bevorzugt 20 mm bis 45 mm erweiterten Bereich der Segmente (2.12)(2.13)(2.14) unterbrochen. Bei minimiertem Umlauf wird erfindungsgemäß eine ausreichende Entkopplung des Segmentes (2.11) von der Fahrzeugkarosserie und eine sehr gute Empfangsqualität erzielt.

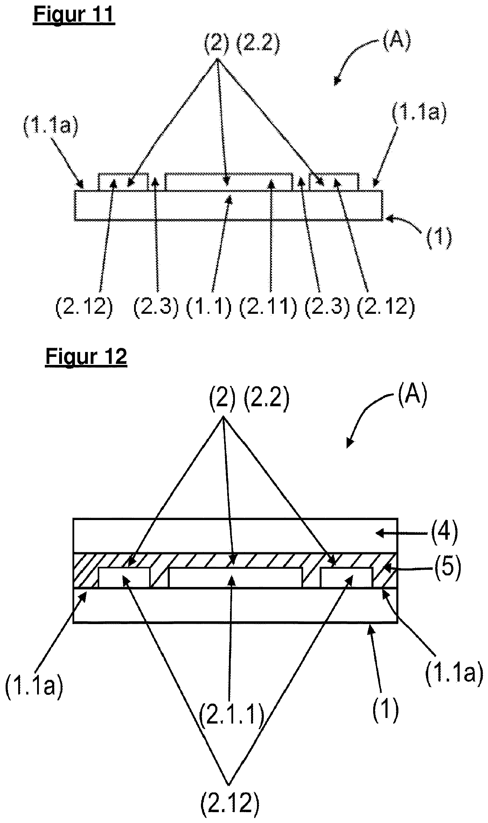

Die Figur 11 stellt einen Querschnitt durch die Antenne 1 längs der Querschnittslinie X ---- X dar.

In einer ersten Alternative der Antenne 1 enthält diese im Wesentlichen nur das Substrat (1) und die Beschichtung (2). Im Allgemeinen wird diese Alternative nur dann verwendet, wenn die Beschichtung (2) keinen mechanischen und/oder chemischen Belastungen ausgesetzt wird. Dies ist z.B. dann der Fall, wenn bei der erfindungsgemäßen Verwendung als transparentes Einbauteil die freie Oberfläche des Substrats (1) nach außen der Atmosphäre zugewandt ist, wogegen die Beschichtung (2) geschützt im Innenraum eines Kraftfahrzeugs oder eines Gebäudes liegt.

Auch die Figur 11 stellt einen Querschnitt durch die Antenne 1 längs der Querschnittslinie X ---- X dar.

In dieser zweiten Alternative der Antenne 1 enthält diese noch ein zweites Substrat (4) von gleicher Beschaffenheit wie das Substrat (1). Beide Substrate (1) und (4) sind über eine 0,8 mm dicke Schicht (5) auf der Basis von reißfestem PVB haftfest miteinander verbunden. Dabei ist die Beschichtung (2) auf dem Substrat (1) gewissermaßen in die Schicht (5) eingebettet. Diese zweite Alternative der Antenne 1 ist hervorragend als Verbundglasscheibe oder Verbundsicherheitsglasscheibe mit Antennenfunktion geeignet.

Die erfindungsgemäßen Antennen 6 bis 10 und 14 werden vorzugsweise hergestellt, indem man zunächst ein transparentes, scheibenförmiges Laminat (A') herstellt. Dieses umfasst ein Substrat (1), das auf seiner Oberfläche (1.1) einen umlaufenden Randbereich (1.1a) aufweist, und eine nicht segmentierte Beschichtung (2), die das Substrat (1) bis auf den Randbereich (1.1a) großflächig bedeckt.

Die nicht segmentierte Beschichtung (2) wird, wie der deutschen Übersetzung des europäischen Patents EP 0 847 965 B1 mit dem Aktenzeichen DE 697 31 2 168 T2, Beispiel 1, Seite 9, Absatz [0063], bis Seite 11, Absatz [0080], beschrieben, hergestellt.

Für die Herstellung des Randbereichs (1.1a) wird die nicht segmentierte Beschichtung (2) bis zu einem Abstand von 7,5 mm von der Kante des Substrats (1) durch Abschleifen entfernt.

Anschließend wird oder werden in die nicht segmentierte Beschichtung (2) der Bereich (2.3) oder die Bereiche (2.3) durch Bestrahlen mit dem fokussierten Laserstrahl eines Neodym:YAG-Lasers einer Wellenlänge von 523 nm eingeschrieben, d.h., das Material (2.2) der Beschichtung (2) wird in den Bereichen (2.3) entfernt. Hierdurch resultieren die Segmente (2.1n) und / oder unterteilten Segmente (2.1n), von denen mindestens eines mit einem kapazitiven Anschluss, z.B. einem Anschluss gemäß der deutschen Patentanmeldung DE 103 19 606 A1, ausgerüstet wird.

Auch die Figur 12 stellt einen Querschnitt durch die Antenne 1 längs der Querschnittslinie X ---- X dar.

In dieser Alternative der Antenne 1 enthält diese noch eine PET-Folie (6) als Trägersubstrat für die leitfähige Beschichtung (2). Die PET-Schicht ist oberhalb und unterhalb mit einer Schicht (5) einer reißfesten PVB verbunden. Dabei ist die Beschichtung (2) gewissermaßen in die Schicht (5) und/oder (6) eingebettet. Beide Substrate (1) und (4) sind über eine 0,8 mm dicke Schicht (5) auf der Basis von reißfestem PVB haftfest mit der PET-Schicht (6) verbunden. Diese Alternative der Antenne 1 ist hervorragend als Verbundglasscheibe oder Verbundsicherheitsglasscheibe mit Antennenfunktion geeignet.

Die Figur 9 zeigt ein Ausführungsbeispiel in weiterer Fortführung gemäß der Figur 8 als Laminat mit einem rückführenden Anschlussleiter (7). Die mindestens drei streifenförmigen und unterteilten Segmente (2.12)(2.13)(2.14) sind nur im Bereich einer Seitenkante im Bereich des Anschlusses (3) angeordnet. Die Entkopplung des Segmentes (2.11) zu einer Seitenkante ist besonders wichtig, da im Randbereich (1.1a) auch ein Anschlussleiter (7) verläuft, der den Anschluss (3) am oberen Rand des Substrates (1) mit der nicht dargestellten Bordelektronik der Fahrzeugkarosse am unteren Rand des Substrates (1) verbindet. Das Laminat enthielt das Substrat (1), eine reißfeste PVB-Folie (5) und ein weiteres Substrat (4). Die Beschichtung (2) war auf der im Laminat innenliegenden Seite des Substrats (1) aufgebracht. Der Siebdruck (7) des Flachleiters befand sich auf der außenliegenden Seite des Substrats (1) im Innenraum der Fahrzeugkarosse, auf der innenliegenden Seite des Substrates (1) oder auf einer zusätzlichen PET-Trägerfolie (6).

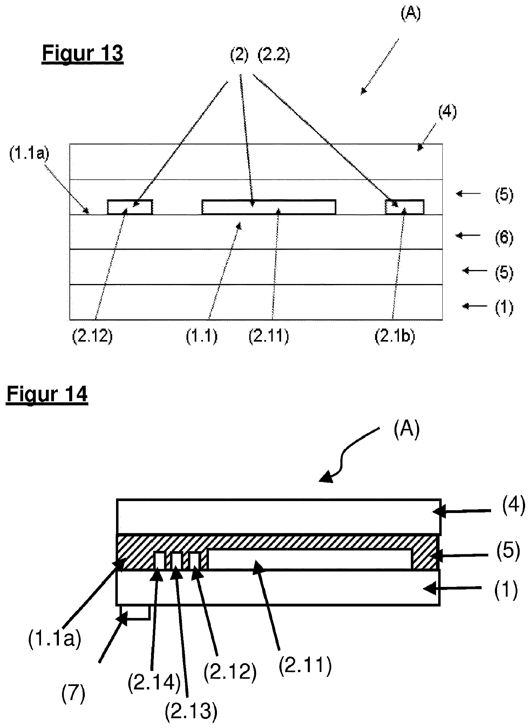

Für die erfindungsgemäßen Ausführungsformen hat sich eine besonders günstige Entkopplung und gute Empfangsleistung des Segmentes (2.11) als Fahrzeugantenne gezeigt. Der Anschlussleiter (7) enthält wie in Figur 9 und im Querschnitt der Figur 14 gezeigt einen Siebdruck und / oder ein Flachkabel (7). Der Anschlussleiter (7) ist mit dem Anschluss (3) und der nicht dargestellten Bordelektrik verbunden. Die Breite des Siebdrucks beträgt 0,3 mm bis 3 mm und verläuft innerhalb des Randbereichs (1.1a) oder in der Projektion des Randbereichs (1.1a). Der Siebdruck und / oder Flachleiter stellen einen sehr guten galvanischen, kapazitiven oder induktiven Kontakt zwischen dem Anschluss (3) am oberen Rand des Substrates (1) und der Bordelektronik im Bereich des unteren Rand des Substrates (1) an der Fahrzeugkarosse her.

## Patentansprüche

1. Transparente, flächenhaft ausgeführte Antenne (A) für das Senden und Empfangen elektromagnetischer Wellen, umfassend
- mindestens ein transparentes, elektrisch isolierendes Substrat (1 ), das in seiner Oberfläche (1.1) einen elektrisch isolierenden, umlaufenden Randbereich (1.1 a) aufweist,
- eine transparente, elektrisch leitfähige Beschichtung (2), die
- die Oberfläche (1.1) des Substrats (1) bis auf den Randbereich (1.1 a) großflächig bedeckt und
- von mindestens zwei flächenförmigen Segmenten gebildet ist, die
- mindestens ein elektrisch leitfähiges Material (2.2) enthalten oder hieraus bestehen und durch
- mindestens einen linienförmigen, elektrisch isolierenden Bereich (2.3) voneinander isoliert sind und
- mindestens einen Anschluss (3) zum galvanischen, kapazitiven oder induktiven Auskoppeln des Antennensignals aus mindestens einem flächenförmigen Segment (2.11 ),
**dadurch gekennzeichnet, dass** der linienförmige, elektrisch isolierende Bereich (2.3) mindestens ein Segment (2.11) umlaufend offen umgibt, so dass die beiden Enden des Bereichs (2.3) bis zum Randbereich (1.1 a) geführt sind, wobei eines der flächenförmigen Segmente (2.11) von dem anderen flächenförmigen Segment teilweise umgeben ist, das flächenförmige Segment streifenförmig ausgebildet ist, das streifenförmige, flächenförmige Segment durch mindestens zwei weitere Bereiche (2.3) in mindestens drei streifenförmige, flächenförmige Segmente (2.12) (2.13) (2.14) geteilt ist, die streifenförmigen, flächenförmigen Segmente (2.12) (2.1 3) (2.14) durch eine Vielzahl linienförmig elektrisch isolierender Bereiche (2.3) unterteilt sind, die quer durch die Segmente (2.12) (2.13) (2.14) verlaufen, womit sich innerhalb der Segmente (2.12) (2.13) (2.14) eine Vielzahl elektrisch leitender Bereiche ergeben, die durch die elektrisch isolierenden Bereiche (2.3) voneinander getrennt sind und die Kantenlängen der elektrischen leitenden Bereiche um den Faktor 10 bis 10000 kleiner als die Wellenlängen der zu empfangenden oder zu sendenden Strahlung sind.

2. Transparente, flächenhaft ausgeführte Antenne (A) nach Anspruch 1, wobei sie noch mindestens ein zweites transparentes, elektrisch isolierendes Substrat (4) umfasst und sich zwischen den Substraten (1) und (4) mindestens eine transparente, reißfeste, haftvermittelnde Schicht (5) befindet.

3. Transparente, flächenhaft ausgeführte Antenne (A) nach Anspruch 2, wobei sich die Beschichtung (2) auf der der Schicht (5) zugewandten Oberfläche (1.1) des Substrats (1) befindet.

4. Transparente, flächenhaft ausgeführte Antenne (A) nach einem der Ansprüche 1 bis 3, wobei sich die Beschichtung (2) auf einer elektrisch isolierenden Trägerfolie (5) befindet und bevorzugt die Trägerfolie eine Polyethylenterephthalatfolie ist.

5. Transparente, flächenhaft ausgeführte Antenne (A) nach einem der Ansprüche 1 bis 4, wobei der umlaufende Randbereich (1.1a) eine Breite von 0,2 cm bis 1,5 cm hat.

6. Transparente, flächenhaft ausgeführte Antenne (A) nach einem der Ansprüche 1 bis 5, wobei der linienförmige, elektrisch isolierende Bereich (2.3) eine Breite von 10 bis 200 µm hat.

7. Transparente, flächenhaft ausgeführte Antenne (A) nach einem der Ansprüche 1 bis 6, wobei der linienförmige, elektrisch isolierende Bereich (2.3) im Wesentlichen parallel zum Randbereich (1.1 a) verläuft.

8. Transparente, flächenhaft ausgeführte Antenne (A) nach einem der Ansprüche 1 bis 7, wobei die Vielzahl elektrisch leitender Bereiche quadratisch sind.

9. Transparente, flächenhaft ausgeführte Antenne (A) nach einem der Ansprüche 1 bis 8, wobei die Kantenlänge der Vielzahl von elektrisch leitenden Bereichen von 1 mm bis 6 mm und bevorzugt von 2 mm bis 4 mm beträgt.

10. Transparente, flächenhaft ausgeführte Antenne (A) nach einem der Ansprüche 1 bis 9, wobei ein galvanischer, kapazitiver oder induktiver Anschlussleiter (7) mindestens teilweise im Randbereich (1.1a) verläuft.

11. Verfahren zur Herstellung einer transparenten, flächenhaft ausgeführten Antenne (A) für den Empfang elektromagnetischer Wellen nach einem der Ansprüche 1 bis 10, wobei mindestens ein linienförmiger, elektrisch isolierender Bereich (2.3) hergestellt wird, in dem man die Beschichtung (2) in dem späteren Bereich (2.3) mechanisch, thermisch und/oder durch Bestrahlung mit elektromagnetischer Strahlung oder Korpuskularstrahlung entfernt und bevorzugt durch Ultraschallhämmern, thermisch und/oder durch Bestrahlung mit einem fokussierten Laserstrahl entfernt.

12. Verwendung der transparenten, flächerihaft ausgeführten Antenne (A) gemäß einem der Ansprüche 1 bis 10 als funktionales und/oder dekoratives Einzelstück und als transparentes Einbauteil in Fortbewegungsmitteln für den Verkehr zu lande, zur Luft und zu Wasser sowie in Möbeln, Geräten und Gebäuden, bevorzugt in Kraftfahrzeugen und besonders bevorzugt als eine Windschutzscheibe, Seitenscheibe, Heckscheibe und/oder ein Glasdach in Kraftfahrzeugen.

## Claims

1. Transparent, flat antenna (A) for transmitting and receiving electromagnetic waves, comprising
- at least one transparent, electrically insulating substrate (1) that has in its surface (1.1) an electrically insulating, circumferential edge region (1.1 a),
- a transparent, electrically conductive coating (2) that
- covers large areas of the surface (1.1) of the substrate (1) up to the edge region (1.1 a) and
- is formed by at least two flat segments that
- contain or are made of at least one electrically conductive material (2.2) and
- are insulated from each other by at least one linear, electrically insulating region (2.3) and
- at least one connection (3) for galvanic, capacitive, or inductive decoupling of the antenna signal from at least one flat segment (2.11),
**characterized in that**
the linear, electrically insulating region (2.3) surrounds, circumferentially open, at least one segment (2.11) such that the two ends of the region (2.3) are guided to the edge region (1.1a), wherein one of the flat segments (2.11) is partially or completely surrounded by the other flat segment, the flat segment is strip-shaped, the strip-shaped, flat segment is divided by at least two other regions (2.3) into at least three strip-shaped, flat segments (2.12) (2.13) (2.14), the strip-shaped, flat segments (2.12) (2.13) (2.14) are divided by a plurality of linear electrically insulating regions (2.3) that run transversely through the segments (2.12) (2.13) (2.14), whereby, within the segments (2.12) (2.13) (2.14), a plurality of electrically regions result, which are separated from each other by the electrically insulating regions (2.3), and the edge lengths of the plurality of electrically conductive regions are smaller by the factor of 10 to 10,000 than the wavelengths of the radiation to be received or transmitted.

2. Transparent, flat antenna (A) according to claim 1, wherein it further comprises at least one second transparent, electrically insulating substrate (4), and at least one transparent, tearresistant, adhesion-promoting layer (5) is located between the substrates (1) and (4).

3. Transparent, flat antenna (A) according to claim 2, wherein the coating (2) is located on the surface (1.1) of the substrate (1) facing the layer (5).

4. Transparent, flat antenna (A) according to one of claims 1 through 3, wherein the coating (2) is located on an electrically insulating carrier film (5) and, preferably, the carrier film (5) is a polyethylene terephthalate film.

5. Transparent, flat antenna (A) according to one of claims 1 through 4, wherein the circumferential edge region (1.1 a) has a width of 0.2 cm to 1.5 cm.

6. Transparent, flat antenna (A) according to one of claims 1 through 5, wherein the linear, electrically insulating region (2.3) has a width of 10 to 200 µm.

7. Transparent, flat antenna (A) according to one of claims 1 through 6, wherein the linear, electrically insulating region (2.3) runs substantially parallel to the edge region (1.1 a).

8. Transparent, flat antenna (A) according to one of claims 1 through 7, wherein the plurality of electrically conductive regions are square.

9. Transparent, flat antenna (A) according to one of claims 1 through 8, wherein the edge length of the plurality of electrically conductive regions is from 1 mm to 6 mm and preferably from 2 mm to 4 mm.

10. Transparent, flat antenna (A) according to one of claims 1 through 9, wherein a galvanic, capacitive, or inductive connection conductor (7) runs at least partially in the edge region (1.1a).

11. Method for producing a transparent, flat antenna (A) for receiving electromagnetic waves according to one of claims 1 through 10, wherein at least one linear, electrically insulating region (2.3) is produced, by removing the coating (2) in the latter region (2.3) mechanically, thermally, and/or by irradiation with electromagnetic radiation or corpuscular radiation and, preferably, by ultrasound hammers, thermally, and/or by irradiation with a focused laser beam.

12. Use of the transparent, flat antenna (A) according to one of claims 1 through 10 as a functional and/or decorative separate part and as a transparent built-in part in means of transportation for land, air, and water traffic as well as in furniture, equipment, and buildings, preferably in motor vehicles and, particularly preferably, as a windshield, side window, rear window, and/or glass roof in motor vehicles.

## Revendications

1. Antenne plate, transparente (A) pour l'émission et la réception d'ondes électromagnétiques, comportant
- au moins un substrat, électriquement isolant transparent (1), qui présente dans sa surface une zone marginale périphérique électriquement isolante (1.1 a),
- un revêtement électriquement conducteur, transparent (2), qui
- recouvre sur une grande surface la surface (1.1) du substrat (1) jusqu'à la zone marginale (1.1 a) et
- est formé d'au moins deux segments plats, qui
- contiennent au moins une matière électriquement conductrice (2.2) ou sont constitués de celle-ci et
- sont isolés les uns des autres par au moins une zone électriquement isolante, linéaire (2.2) et
- au moins un raccordement (3) pour le découplage galvanique, capacitif ou inductif du signal de l'antenne à partir d'au moins un segment plat (2.11),
**caractérisée par le fait que** la zone électriquement isolante, linéaire (2.3) entoure de façon périphériquement ouverte au moins un segment (2.11), de telle sorte que les deux extrémités de la zone (2.3) sont guidées jusqu'à la zone marginale (1.1a), où
l'un des segments plats (2.11) est entouré partiellement ou totalement par l'autre segment plat, le segment plat est réalisé en forme de bande, le segment plat, en forme de bande est divisé par au moins deux autres zones (2.3) en au moins trois segments plats, en forme de bande (2.12) (2.13) (2.14), les segments plats, en forme de bande (2.12) (2.13) (2.14) sont subdivisés par une pluralité de zones électriquement isolantes linéaires (2.3), qui s'étendent à travers les segments (2.12) (2.13) (2.14), ce par quoi il se présente, à l'intérieur des segments (2.12) (2.13) (2.14 ), une pluralité de zones électriquement conductrices, qui sont séparées les unes des autres par les zones électriquement isolantes (2.3) et les longueurs du côté des différentes zones électriquement conductrices sont plus petites que les longueurs d'onde du rayonnement à recevoir ou à envoyer du facteur 10 à 10 000.

2. Antenne plate, transparente (A) selon la revendication 1, dans laquelle elle comporte encore au moins un second substrat électriquement isolant, transparent (4) et au moins une couche adhésive, résistante au déchirement, transparente (5) se trouve entre les substrats (1) et (4).

3. Antenne plate, transparente (A) selon la revendication 2, dans laquelle le revêtement (2) se trouve sur la surface (1.1) du substrat (1) tournée vers la couche (5).

4. Antenne plate, transparente (A) selon l'une des revendications 1 à 3, dans laquelle le revêtement (2) se trouve sur un film support électriquement isolant (5) et, de préférence, le film support est un film de poly(téréphtalate d'éthylène).

5. Antenne plate, transparente (A) selon l'une des revendications 1 à 4, dans laquelle la zone marginale périphérique (1.1 a) a une largeur de 0,2 cm à 1,5 cm.

6. Antenne plate, transparente (A) selon l'une des revendications 1 à 5, dans laquelle la zone électriquement isolante, linéaire (2.3) a une largeur de 10 à 200 µm.

7. Antenne plate, transparente (A) selon l'une des revendications 1 à 6, dans laquelle la zone électriquement isolante, linéaire (2.3) s'étend sensiblement parallèlement a la zone marginale (1.1 a).

8. Antenne plate, transparente (A) selon l'une des revendications 1 à 7, dans laquelle les différentes zones électriquement conductrices sont carrées.

9. Antenne plate, transparente (A) selon l'une des revendications 1 à 8, dans laquelle la longueur du côté des différentes zones électriquement conductrices s'élève à 1 mm à 6 mm et, de préférence, à 2 mm à 4 mm.

10. Antenne plate, transparente (A) selon l'une des revendications 1 à 9, dans laquelle un conducteur de raccordement galvanique, capacitif ou inductif (7) s'étend au moins partiellement dans la zone marginale (1.1 a).

11. Procédé de fabrication d'une antenne plate, transparente (A) pour la réception d'ondes électromagnétiques selon l'une des revendications 1 à 10, dans lequel au moins une zone électriquement isolante, linéaire (2.3) est produite, dans lequel on retire le revêtement (2) dans la zone ultérieure (2.3) mécaniquement, thermiquement et/ou par irradiation par un rayonnement électromagnétique ou un rayonnement corpusculaire et, de préférence, on la retire par martelage ultrasons, thermiquement et/ou par irradiation par un faisceau laser focalisé.

12. Utilisation de l'antenne plate, transparente (A) selon l'une des revendications 1 à 10 en tant que pièce simple fonctionnelle et/ou décorative et en tant que pièce rapportée transparente dans des moyens de locomotion pour le transport par terre, par air et par eau, ainsi que dans des meubles, des appareils et des constructions, de préférence dans des véhicules automobiles et de manière particulièrement préférée en tant que pare-brise, vitre latérale, vitre arrière et/ou toit vitré dans des véhicules automobiles.
